(19) Europäisches Patentamt
European Patent Office
Office européen des brevets

(11) **EP 2 398 672 B1**

(12) **EUROPÄISCHE PATENTSCHRIFT**

(45) Veröffentlichungstag und Bekanntmachung des Hinweises auf die Patenterteilung:
**14.01.2015 Patentblatt 2015/03**

(21) Anmeldenummer: **10708699.3**

(22) Anmeldetag: **23.01.2010**

(51) Int Cl.:
**B60N 2/48** (2006.01)     **G01B 7/00** (2006.01)
**G01V 3/08** (2006.01)

(86) Internationale Anmeldenummer:
**PCT/EP2010/000399**

(87) Internationale Veröffentlichungsnummer:
**WO 2010/094380 (26.08.2010 Gazette 2010/34)**

(54) **SENSOREINRICHTUNG ZUR ERMITTLUNG DER ABWEICHUNG EINER KOPFSTÜTZENPOSITION VON EINER SOLLPOSITION**

SENSOR DEVICE FOR DETERMINING THE DEVIATION OF A HEAD SUPPORT POSITION FROM A TARGET POSITION

DISPOSITIF DE DÉTECTION DESTINÉ À DÉTERMINER L'ÉCART DE LA POSITION D'UN APPUI-TÊTE PAR RAPPORT À UNE POSITION PRESCRITE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.02.2009 DE 102009009741**

(43) Veröffentlichungstag der Anmeldung:
**28.12.2011 Patentblatt 2011/52**

(73) Patentinhaber: **Brose Fahrzeugteile GmbH & Co. Kommanditgesellschaft, Hallstadt**
**96103 Hallstadt (DE)**

(72) Erfinder:
• **WÜRSTLEIN, Holger**
  **97475 Zeil am Main (DE)**
• **HOFMANN, Tobias**
  **97633 Leinach (DE)**

(74) Vertreter: **FDST Patentanwälte**
**Nordostpark 16**
**90411 Nürnberg (DE)**

(56) Entgegenhaltungen:
**EP-A2- 1 857 318     WO-A1-2009/028532**
**FR-A1- 2 866 846     JP-A- 1 011 512**

**Beschreibung**

Die Erfindung bezieht auf eine Sensoreinrichtung zur Ermittlung der Abweichung der Position einer Kopfstütze eines Kraftfahrzeugsitzes von einer Sollposition.

Kopfstützen dienen im Rahmen eines Kraftfahrzeugsitzes dazu, den Kopf eines den Sitz benutzenden Fahrzeuginsassen im Crash-Fall abzustützen und damit ein Abknicken der Halswirbelsäule nach hinten zu vermeiden. Der durch die Kopfstütze erzielte Sicherheitsgewinn wird in vollem Umfang aber nur dann erreicht, wenn die Kopfstütze bezüglich der vertikalen Kopfposition auf richtiger Höhe eingestellt ist, so dass der Kopf im Crash-Fall im Wesentlichen auf ein hierfür vorgesehenes Zentrum der Kopfstütze aufschlägt. Eine falsch eingestellte Kopfstütze kann dagegen im Crash-Fall zu Verletzungen im Nacken- und Kopfbereich führen. Um das Risiko einer Kopfverletzung, beispielsweise einer Gehirnerschütterung beim Aufprall des Kopfes auf der Kopfstütze zu minimieren, sollte die Kopfstütze zudem in horizontaler Richtung möglichst nah an dem Kopf des Fahrzeuginsassen angeordnet sein, dennoch aber eine ungehinderte Kopfbewegung ermöglichen.

Zur korrekten Positionierung einer Kopfstütze ist diese üblicherweise in vertikaler Richtung, sowie teilweise auch in horizontaler Richtung bezüglich der Sitzlehne verstellbar. Bei einem hochwertigen Kraftfahrzeugsitz erfolgt die Verstellung der Kopfstütze häufig motorisch.

Zur Vermeidung einer Fehlpositionierung der Kopfstütze ist einer modernen Kopfstützenverstelleinrichtung bisweilen eine Sensoreinrichtung zugeordnet, die die Kopfposition eines Fahrzeuginsassen bezüglich der zugehörigen Kopfstütze erfasst. So ist beispielsweise einer aus EP 1 857 318 A2 bekannten Kopfstützenverstelleinrichtung eine Sensoreinrichtung in Form eines in die Kopfstütze integrierten kapazitiven Näherungssensors zugeordnet. Dieser Näherungssensor umfasst drei Elektroden, die in vertikaler Richtung zueinander beabstandet an der Vorderseite der Kopfstütze angeordnet sind. Die beiden äußeren Elektroden dienen hierbei als Sendeelektroden zur Ausstrahlung eines elektrischen Wechselfeldes in einen vor der Kopfstütze angeordneten Raumbereich. Die mittlere Elektrode dient als gemeinsame Empfangselektrode zur Messung der zwischen jeder der Sende-Elektroden und der Empfangselektrode gebildeten Kapazität. Die bekannte Verstelleinrichtung nutzt den physikalischen Effekt, dass sich die Kapazität der Elektrodenanordnung durch die Anwesenheit des Kopfes im elektrischen Wechselfeld in charakteristischer Weise ändert. Die Abweichung der Kopfstützenposition von einer vorgegebenen vertikalen Sollposition bezüglich des Kopfes des Fahrzeuginsassen wird durch Vergleich der den beiden Sendeelektroden jeweils zugeordneten Kapazitätswerte bestimmt. Als Sollposition für die Kopfstütze wird hierbei diejenige Kopfstützenposition erkannt, bei der diese Kapazitätswerte identisch sind.

Ähnliche Sensoreinrichtungen mit einem jeweils drei Elektroden umfassenden kapazitiven Näherungssensor zur Detektion der Kopfposition bei einer Kopfstütze sind ferner auch aus FR 2 884 775 A1 und DE 199 16 804 C1 bekannt.

Der Erfindung liegt die Aufgabe zugrunde, eine demgegenüber verbesserte Sensoreinrichtung für eine Kopfstütze anzugeben.

Diese Aufgabe wird erfindungsgemäß gelöst durch die Merkmale des Anspruchs 1. Die zur Ermittlung der Positionsabweichung einer Kopfstütze eines Kraftfahrzeugsitzes von einer Sollposition vorgesehene Sensoreinrichtung umfasst danach einen in die Kopfstütze integrierten bzw. zur Integration in die Kopfstütze vorgesehenen kapazitiven Näherungssensor, wobei dieser Näherungssensor zwei mit vertikalem Abstand zueinander angeordnete Sendeelektroden sowie eine gemeinsame Empfangselektrode enthält, wobei diese vorzugsweise etwa mittig zwischen den beiden Sendeelektroden angeordnet ist. Die Sensoreinrichtung umfasst des Weiteren eine Steuereinheit. Diese Steuereinheit ist - schaltungstechnisch oder programmtechnisch - dazu eingerichtet, die Sendeelektroden zur Aussendung eines elektrischen Wechselfeldes anzusteuern. Die Steuereinheit ist weiterhin dazu eingerichtet, elektrische Empfangssignale, die von der Empfangselektrode erfasst werden, und die jeweils eine Information über die zwischen einer der Sendeelektroden und der gemeinsamen Empfangselektrode gebildete Kapazität enthalten, auszuwerten, und im Zuge dieser Auswertung ein Maß für die vertikale und horizontale Abweichung der Kopfstützenposition von einer bezüglich der Position des Kopfes eines Fahrzeuginsassen vorgegebenen Sollposition zu bestimmen.

Die Steuereinheit ist weiterhin dazu eingerichtet, das Maß für die vertikale Abweichung der Kopfstützenposition anhand einer Differenz der den beiden Sendeelektroden jeweils zugeordneten Empfangssignale zu bestimmen, und das Maß für die horizontale Abweichung der Kopfstützenposition anhand einer Summe dieser Empfangssignale zu bestimmen. Alternativ hierzu kann die Steuereinheit im Rahmen der Erfindung auch dazu eingerichtet sein, für die Summen- bzw. Differenzbildung anstelle der Empfangssignale Größen heranzuziehen, die aus diesen Empfangssignalen abgeleitet sind. So ermittelt die Steuereinheit in vorteilhafter Ausführung der Erfindung das Maß für die vertikale Abweichung der Kopfstützenposition durch Differenzbildung zweier aus den Empfangssignalen abgeleiteten Kapazitätswerte, die jeweils einer der beiden Sendeelektroden zugeordnet sind. Weiterhin bestimmt die Steuereinheit auch das Maß für die horizontale Abweichung der Kopfstützenposition vorzugsweise durch Summenbildung über diese beiden Kapazitätswerte.

Die Summen- und/oder Differenzbildung erfolgt wahlweise durch schaltungstechnische Mittel auf Hardware-Ebene, beispielsweise mittels (insbesondere analoger) Differenzier- bzw. Addierschaltungen, oder durch programmtechnische Mittel, d.h. auf Software-Ebene durch numerische Summierung bzw. Differenzierung digitalisierter Messgrößen. Durch die Berücksichtigung der Summenmessung wird insbesondere eine erhöhte Sensorreichweite bei der Einstellung der horizontalen Kopfstützenposition erzielt.

Äquivalenterweise kann die Erfindung auch auf eine Sensoreinrichtung angewendet werden, deren kapazitiver Näherungssensor zwei mit vertikalem Abstand zueinander angeordnete Empfangselektroden und eine - insbesondere mittig - zwischen diesen angeordnete gemeinsame Sendeelektrode umfasst. In diesem Fall ist die Steuereinheit dazu eingerichtet, die gemeinsame Sendeelektrode zur Aussendung des elektrischen Wechselfeldes anzusteuern und die hier von den beiden Empfangselektroden jeweils erfassten elektrischen Empfangssignale auf die vorstehend beschriebene Weise auszuwerten.

Nachfolgend wird ein Ausführungsbeispiel der Erfindung anhand einer Zeichnung näher erläutert. Darin zeigen:

Fig. 1    in einem schematischen Blockschaltbild eine Kopfstütze mit einer zugeordneten Verstelleinrichtung sowie einer Sensoreinrichtung zur Ermittlung der Abweichung der Kopfstützenposition von einer Sollposition, und

Fig. 2    in einer schematischen Seitenansicht einen kapazitiven Näherungssensor der Sensoreinrichtung mit einem vor dem Näherungssensor angeordneten Kopf eines Fahrzeugbenutzers sowie den Feldverlauf eines von dem Näherungssensor ausgestrahlten elektrischen Feldes.

Einander entsprechende Teile und Größen sind in allen Figuren stets mit gleichen Bezugszeichen versehen.

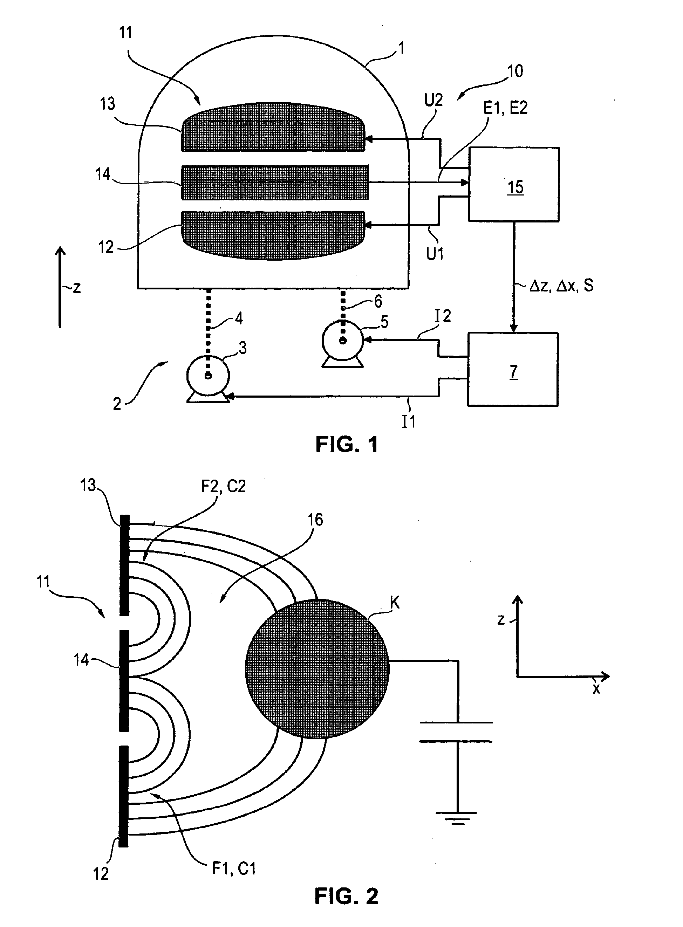

Fig. 1 zeigt - grob schematisch vereinfacht - eine Kopfstütze 1 eines (nicht näher dargestellten) Kraftfahrzeugsitzes. Die Kopfstütze 1 ist in üblicher Weise am oberen Ende der Sitzlehne des Kraftfahrzeugsitzes gehaltert und gegenüber dieser Sitzlehne reversibel in einer Vertikalrichtung z sowie unabhängig hiervon und wiederum reversibel in einer Horizontalrichtung x (Fig. 2) verstellbar.

In der bestimmungsgemäßen Einbausituation des Kraftfahrzeugsitzes in einem Kraftfahrzeug ist die Vertikalrichtung z zumindest im Wesentlichen senkrecht bezüglich des umgebenden Raumes angeordnet. Sie kann bezüglich der Raumsenkrechten aber auch leicht geneigt sein. Die Horizontalrichtung x ist bei eingebautem Kraftfahrzeugsitz etwa parallel zur Längsachse des Kraftfahrzeugs und somit parallel zur Fahrtrichtung ausgerichtet. Auch die Horizontalrichtung x kann aber geringfügig gegenüber der Raumhorizontalen geneigt sein. Insbesondere stehen die Vertikalrichtung z und die Horizontalrichtung x etwa senkrecht aufeinander. In der Darstellung gemäß Fig. 1 ist die Horizontalrichtung x senkrecht zur Zeichenebene angeordnet.

Die Kopfstütze 1 ist mittels einer zugeordneten Verstelleinrichtung 2 motorisch sowohl in Vertikalrichtung z als auch in Horizontalrichtung x verstellbar. Die Verstelleinrichtung 2 umfasst einen ersten Stellmotor 3, der zur vertikalen Verstellung der Kopfstütze 1 über eine zugeordnete Stellmechanik 4 mit der Kopfstütze 1 verbunden ist. Zur horizontalen Verstellung der Kopfstütze 1 umfasst die Verstelleinrichtung 2 einen weiteren Stellmotor 5, der wiederum über eine zugeordnete Stellmechanik 6 auf die Kopfstütze 1 wirkt. Der Stellmotor 3 ist insbesondere in der Sitzlehne des Kraftfahrzeugsitzes angeordnet und wirkt über die Stellmechanik 4 auf Holme, mit denen die Kopfstütze 1 in üblicher Weise in der Sitzlehne verankert ist. Der Stellmotor 5 ist dagegen vorzugsweise in der Kopfstütze 1 integriert, wobei über die zugeordnete Stellmechanik 6 ein nach vorne gewandtes Frontteil der Kopfstütze 1 gegenüber einem an der Sitzlehne verankerten Rückenteil der Kopfstütze 1 horizontal verstellbar ist.

Zur Ansteuerung der Stellmotoren 3 und 5 umfasst die Verstelleinrichtung 2 eine zugeordnete Motorsteuereinheit 7, die z.B. im Wesentlichen durch einen Mikrokontroller mit darin implementierter Steuersoftware gebildet ist, und die die Stellmotoren 3 und 5 durch Ausgabe eines jeweils entsprechenden Steuerstroms I1 und I2 ansteuert.

Bei durch einen Fahrzeugbenutzer belegtem Sitz ist die diesem Sitz zugeordnete Kopfstütze 1 bestimmungsgemäß auf eine vertikale Sollposition einzustellen, bei der die Auge-Ohr-Linie des Kopfes K (Fig. 2) des Sitzbenutzers etwa auf einer Höhe mit dem Flächenzentrum der Kopfstütze 1 angeordnet ist. Bezüglich ihres horizontalen Verstellweges ist die Kopfstütze 1 bestimmungsgemäß auf eine horizontale Sollposition einzustellen, bei der der Abstand zwischen der Kopfstütze 1 und dem Kopf K maximal 5 cm, bevorzugt etwa 2 cm bis 3cm, beträgt. Zur automatischen Ermittlung dieser (vertikalen und horizontalen) Sollposition ist der Kopfstütze 1 eine Sensoreinrichtung 10 zugeordnet. Die Sensoreinrichtung 10 umfasst einen kapazitiven Näherungssensor 11. Dieser Näherungssensor 11 ist aus drei länglichen Elektrodenstreifen aus leitfähigem, flexiblem Material gebildet, die an einer Frontfläche der Kopfstütze 1 in diese integriert sind. Diese Elektrodenstreifen sind bezüglich ihrer Längserstreckung parallel und mit Abstand übereinander angeordnet und umfassen eine zuunterst angeordnete Sendeelektrode 12, eine zuoberst angeordnet weitere Sendeelektrode 13 sowie eine gemeinsame Empfangselektrode 14, die mittig und mit Abstand zwischen den beiden Sendeelektroden 12 und 13 angeordnet ist.

Die Sensoreinrichtung 10 umfasst weiterhin eine Sensorsteuereinheit 15, die wiederum durch einen Mikrokontroller oder einen ASIC gebildet ist und vorzugsweise in der Kopfstütze 1 integriert ist.

Im Betrieb der Sensoreinrichtung 10 steuert die Sensoreinrichtung 15 die Sendeelektroden 12 und 13 im Zeitmultiplexingverfahren, d.h. zeitlich alternierend, mit je einer Wechselspannung U1 bzw. U2 an, aufgrund welcher die Sendeelektroden 12 und 13 in einen dem Näherungssensor 11 vorgelagerten Raum 16 (Fig. 2) jeweils ein elektrisches Wechselfeld F1 bzw. F2 erzeugen. Der räumliche Verlauf dieser Wechselfelder F1 und F2 ist in Fig. 2 grob schematisch dargestellt. Fig. 2 ist zu entnehmen, dass jede Sendeelektrode 12 und 13 mit der gemeinsamen Empfangselektrode 14 einen Kondensator bildet, der im elektrischen Sinne durch eine Kapazität C1 bzw. C2 charakterisiert ist. Fig. 2 ist weiterhin zu entnehmen, dass der Kopf K des den Fahrzeugsitz belegenden Fahrzeuginsassen aufgrund der stets in gewissem Umfang vorhandenen Erdung des menschlichen Körpers ebenfalls in gewissem Umfang als Gegenelektrode zu den Sendeelektroden 12 und 13 wirkt und aufgrund dieser Wirkung einen Anteil des jeweils zwischen jeder der Sendeelektroden 12 und 13 und der Empfangselektrode 14 gebildeten Feldes F1 bzw. F2 abzieht. Die messbaren Kapazitäten C1 und C2 werden hierdurch erniedrigt, und zwar umso stärker, je näher der Kopf K der jeweils zugeordneten Sendeelektrode 12 bzw. 13 ist.

Diese physikalische Gesetzmäßigkeit wird von der Sensoreinrichtung 10 zur Detektion der Kopfposition relativ zu der Kopfstütze 1, und somit zur Ermittlung der Abweichung der aktuellen Kopfstützenposition von der zugeordneten Sollposition ausgenutzt. Die Sensorsteuereinheit 15 erfasst hierbei Empfangssignale E1 und E2 in Form von elektrischen Spannungen und Strömen, die in der Empfangselektrode 14 unter Einfluss der elektrischen Wechselfelder F1 bzw. F2 erzeugt werden.

Die Sensorsteuereinheit 15 berechnet aus den Empfangssignalen E1 und E2 jeweils die zugeordnete Kapazität C1 bzw. C2 und ermittelt hieraus ein Maß für die vertikale Abweichung der aktuellen Kopfstützenposition von der vertikalen Sollposition (nachfolgend als vertikales Abweichungsmaß $\Delta z$ bezeichnet), sowie ein Maß für die horizontale Abweichung der aktuellen Kopfstützenposition von der horizontalen Sollposition (nachfolgend als horizontales Abweichungsmaß $\Delta x$ bezeichnet).

Die Sensorsteuereinheit 15 ermittelt hierbei das vertikale Abweichungsmaß $\Delta z$ anhand einer Differenzbildung der Kapazitäten C1 und C2:

$$\Delta z = C1 - C2$$

Das horizontale Abweichungsmaß $\Delta x$ ermittelt die Sensorsteuereinheit 15 anhand der Summe der Kapazitäten C1 und C2:

$$\Delta x = C1 + C2$$

Die Berechnung der Kapazitäten C1 und C2 sowie der Abweichungsmaße $\Delta z$ und $\Delta x$ erfolgt numerisch durch eine in der Sensorsteuereinheit 15 hinterlegte Steuersoftware.

In einfachster Ausführung steuert die Sensorsteuereinheit 15 nach Maßgabe der Abweichungsmaße $\Delta z$ und $\Delta x$ eine optische und/oder akustische Anzeige, die es dem Fahrzeuginsassen ermöglicht, die Kopfstütze 1 durch manuelle Eingabe von Steuerbefehlen auf die vertikale und horizontale Sollposition einzustellen.

In bevorzugter, in Fig. 1 dargestellter Ausführung steuert die Sensorsteuereinheit 15 die Verstelleinrichtung 2 unmittelbar an, indem sie die Abweichungsmaße $\Delta z$ und $\Delta x$ an die Motorsteuereinheit 7 abgibt. Die Sensorsteuereinheit 15 übermittelt zusätzlich ein Detektionssignal S an die Motorsteuereinheit 7, das die Präsenz des Kopfes K im Erfassungsfeld des Näherungssensors 11 anzeigt. Das Detektionssignal S wird gesendet, wenn zumindest eine der Kapazitäten C1 und C2 einen vorgegebenen Schwellwert unterschreitet.

Die Einstellung der Kopfstütze 1 erfolgt hierbei nach folgendem Suchverfahren:

Die Motorsteuereinheit 7 startet zunächst einen vertikalen Suchlauf. Die Motorsteuereinheit 7 verfährt hierzu die Kopfstütze 1 ausgehend von einer Ausgangsstellung, in der sich die Kopfstütze 1 in Vertikalrichtung z am unteren Anschlag ihres Verstellweges und in Horizontalrichtung x am hinteren Anschlag ihres Verstellweges befindet, durch entsprechende Ansteuerung des Stellmotors 3 nach oben. Die Motorsteuereinheit 7 erfasst während des Suchlaufs kontinuierlich oder

in regelmäßigen Zeitabständen das von der Sensorsteuereinheit 15 zugelieferte Abweichungsmaß $\Delta z$ und stoppt die vertikale Verstellung, wenn das Abweichungsmaß $\Delta z$ innerhalb vorgegebener Toleranzen den Wert Null erreicht oder das Vorzeichen wechselt, sofern die Sensorsteuereinheit 15 gleichzeitig das Detektionssignal S empfängt.

Erhält die Motorsteuereinheit 7 dagegen über den gesamten vertikalen Verstellweg der Kopfstütze 1 von der Sensorsteuereinheit 15 das Detektionssignal S nicht, so verfährt sie durch Ansteuerung des Stellmotors 5 die Kopfstütze 1 um eine vorgegebene Strecke nach vorne und wiederholt den vertikalen Suchlauf. Wenn über den gesamten vertikalen und horizontalen Verstellbereich der Kopfstütze 1 kein Kopf K detektiert werden kann, verfährt die Motorsteuereinheit 7 die Kopfstütze 1 in eine vorgegebene Standardstellung (auch: Sicherheitsstellung), insbesondere in eine so genannte 2/3-Stellung, bei der die Kopfstütze 1 in Horizontalrichtung x in zurückgezogener Position sowie in Vertikalrichtung z in einer etwa zu 2/3 ihres vertikalen Verstellweges ausgefahrener Position eingestellt wird. Sofern dagegen die Sensoreinrichtung 10 während des vertikalen Suchlaufes die Präsenz des Kopfes K detektiert, und die Motorsteuereinheit 7 entsprechend die Kopfstütze 1 auf die vertikale Sollposition eingestellt hat, beginnt die Motorsteuereinheit 7 mit einem horizontalen Suchlauf, im Zuge dessen sie die Kopfstütze 1 durch Ansteuerung des Stellmotors 5 in Horizontalrichtung x nach vorne fährt. Die Motorsteuereinheit 7 erfasst hierbei das Abweichungsmaß Δx und stoppt die Kopfstützenverstellung dann, wenn das Abweichungsmaß Δx den zugehörigen Schwellwert erreicht oder überschreitet.

In einer verbesserten Variante des Suchverfahrens beginnt die Motorsteuereinheit 7 den Suchlauf stets ausgehend von der aktuellen Kopfstützenstellung. Die Kopfstütze 1 wird also nicht zunächst in die vorstehend beschriebene Ausgangsstellung verfahren. Außerdem führt die Motorsteuereinheit 7 den horizontalen und vertikalen Suchlauf bevorzugt gleichzeitig durch. Die Kopfstütze 1 wird also durch simultane Verstellung in Vertikalrichtung z und Horizontalrichtung x auf kürzestem Wege in die Sollposition verfahren, sofern die Sensorsteuereinheit 15 die Anwesenheit des Kopfes K erkennt. Wird kein Kopf K erkannt, so verfährt die Motorsteuereinheit 7 die Kopfstütze 1 in Vertikalrichtung z zunächst nach oben, und danach ggf. wieder nach unten. Sofern auch über den gesamten vertikalen Verstellweg der Kopfstütze 1 kein Kopf K erkannt wird, fährt die Motorsteuereinheit 7 die Kopfstütze 1 wiederum in die Standardstellung.

Das vorstehend beschriebene Suchverfahren wird standardgemäß beim Anlassen des Kraftfahrzeugmotors durchgeführt. Es wird optional während des Fahrzeugbetriebs in regelmäßigen Abständen und/oder auf Anforderung des Fahrzeuginsassen wiederholt.

In alternativen Ausführungen der Erfindung können die Motorsteuereinheit 7 und die Sensorsteuereinheit 15 auch in einem gemeinsamen Bauteil, insbesondere einem gemeinsamen Microcontroller und ggf. auch in einem gemeinsamen Softwaremodul integriert sein. Des Weiteren kann die Summen- und/oder Differenzbildung auch auf Hardwareebene durch elektrische Schaltungen erfolgen. Insbesondere können für die Summenbildung die beiden Sendeelektroden 12 und 13 auch zeitgleich angesteuert werden.

Ferner kann der Näherungssensor 11 auch mehr als zwei Sendeelektroden, z.B. vier Sendeelektroden, umfassen. In diesem Fall wird eine entsprechend erhöhte Anzahl von Empfangssignalen bzw. daraus abgeleiteten Größen, insbesondere die aus den Empfangssignalen jeweils abgeleiteten Kapazitäten, in der Differenz- bzw. Summenbildung berücksichtigt.

Bezugszeichenliste

1    Kopfstütze
2    Verstelleinrichtung
3    Stellmotor
4    Stellmechanik
5    Stellmotor
6    Stellmechanik
7    Motorsteuereinheit
10   Sensoreinrichtung

11   Näherungssensor
12   Sendeelektrode
13   Sendeelektrode
14   Empfangselektrode
15   Sensorsteuereinheit
16   Raum

C1,C2   Kapazität
E1,E2   Empfangssignale
F1,F2   elektrisches Wechselfeld
I1,I2   Steuerstrom
K    Kopf
S    Detektierungssignal
U1,U2   Wechselspannung
x    Horizontalrichtung
z    Vertikalrichtung
Δz,Δx   Abweichungsmaß

Patentansprüche

1.   Sensoreinrichtung (10) zur Ermittlung der Abweichung der Position einer Kopfstütze (1) eines Kraftfahrzeugsitzes von einer Sollposition, umfassend

- einen in die Kopfstütze (1) integrierbaren oder integrierten kapazitiven Näherungssensor (11), der

o zwei mit vertikalem Abstand zueinander angeordnete Sendeelektroden (12,13) und
o eine gemeinsame Empfangselektrode (14) aufweist, und

- eine Steuereinheit (15), die dazu eingerichtet ist,

o die Sendeelektroden (12,13) zur Aussendung eines elektrischen Wechselfeldes (F1,F2) anzusteuern,
o aus von der Empfangselektrode (14) erfassten elektrischen Empfangssignalen (E1,E2), die eine Information über die zwischen jeder der Sendeelektroden (12,13) und der Empfangselektrode (14) jeweils gebildeten Kapazität (C1,C2) enthalten, ein Maß (Δz,Δx) für die vertikale und horizontale Abweichung der Kopfstützenposition von einer bezüglich der Position eines Kopfes (K) eines Fahrzeuginsassen vorgegebenen Sollposition zu bestimmen,
o das Maß (Δz) für die vertikale Abweichung der Kopfstützenposition anhand einer Differenz der den beiden Sendeelektroden (12,13) zugeordneten Empfangssignale (E1,E2) oder hieraus jeweils abgeleiteten Größen (C1,C2) zu bestimmen, und
o das Maß (Δx) für die horizontale Abweichung der Kopfstützenposition anhand einer Summe der den beiden Sendeelektroden (12,13) zugeordneten Empfangssignale (E1,E2) oder hieraus jeweils abgeleiteten Größen (C1 ,C2) zu bestimmen.

**2.** Sensoreinrichtung (10) nach Anspruch 1, wobei die Steuereinheit (15) schaltungstechnische Mittel zur Summen- und/oder Differenzbildung umfasst.

**3.** Sensoreinrichtung (10) nach Anspruch 1, wobei die Steuereinheit (15) programmtechnische Mittel zur Summen- und/oder Differenzbildung umfasst.

## Claims

**1.** Sensor device (10) for determining the deviation of the position of a head support (1) of a motor vehicle seat from a target position, comprising

- a capacitive proximity sensor (11) that can be or is integrated into the head support (1), which has

  ◦ two transmitting electrodes (12, 13) arranged at a vertical distance from each other, and
  ◦ a mutual receiving electrode (14), and

- a control unit (15), which is equipped for:

  ◦ actuating the transmitting electrodes (12, 13) for transmitting an alternating electrical field (F1, F2),
  ◦ determining a dimension ($\Delta z$, $\Delta x$) for the vertical and horizontal deviation of the head support position from a predetermined target position relative to the position of a head (K) of a vehicle passenger from received electrical signals (E1, E2) recorded by the receiving electrode (14), said signals including information about the capacitance (C1, C2) formed between each of the transmitting electrodes (12, 13) and the receiving electrode (14),
  ◦ determining the dimension ($\Delta z$) for the vertical deviation of the head support position with the aid of a difference between the received signals (E1, E2) allocated to the two transmitting electrodes (12, 13) or respective parameters (C1, C2) derived therefrom, and
  ◦ determining the dimension ($\Delta x$) for the horizontal deviation of the head support position with the aid of a sum of the received signals (E1, E2) allocated to the two transmitting electrodes (12, 13) or respective parameters (C1, C2) derived therefrom.

**2.** Sensor device (10) according to claim 1, wherein the control unit (15) comprises means in circuit design for sum and/or difference formation.

**3.** Sensor device (10) according to claim 1, wherein the control unit (15) comprises programmatic means for sum and/or difference formation.

## Revendications

**1.** Dispositif de détection (10) pour déterminer l'écart de la position d'un appui-tête (1) d'un siège de véhicule automobile par rapport à une position de consigne, comprenant

- un détecteur de proximité capacitif (11) qui peut être intégré ou est intégré à l'appui-tête (1), et qui comporte

  ◦ deux électrodes d'émission (12, 13) agencées de manière à être espacées verticalement l'une de l'autre, et
  ◦ une électrode de réception commune (14), et

- une unité de commande (15), qui est conçue et réalisée en vue de

  ◦ commander les électrodes d'émission (12, 13) pour l'émission d'un champ électrique alternatif (F1, F2),
  ◦ déterminer, à partir des signaux électriques de réception (E1, E2) relevés par l'électrode de réception (14) et renfermant une information concernant la capacité (C1, C2) formée respectivement entre chacune des électrodes d'émission (12, 13) et l'électrode de réception (14), une mesure ($\Delta z$, $\Delta x$) pour l'écart vertical et horizontal de la position d'appui-tête par rapport à une position de consigne prescrite relative à la position d'une tête (K) d'un occupant du véhicule,
  ◦ déterminer la mesure ($\Delta z$) pour l'écart vertical de la position d'appui-tête, à l'aide d'une différence des signaux de réception (E1, E2) associés aux deux électrodes d'émission (12, 13) ou de grandeurs (C1, C2) qui en sont respectivement dérivées, et
  ◦ déterminer la mesure ($\Delta x$) pour l'écart horizontal de la position d'appui-tête, à l'aide d'une somme des signaux de réception (E1, E2) associés aux deux électrodes d'émission (12, 13) ou de grandeurs (C1, C2) qui en sont respectivement dérivées.

**2.** Dispositif de détection (10) selon la revendication 1, dans lequel l'unité de commande (15) comprend des moyens techniques de circuits pour la formation de sommes et/ou de différences.

**3.** Dispositif de détection (10) selon la revendication 1, dans lequel l'unité de commande (15) comprend des moyens techniques de programmes pour la formation de sommes et/ou de différences.

**FIG. 1**

**FIG. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1857318 A2
- FR 2884775 A1
- DE 19916804 C1